# EUROPEAN PATENT APPLICATION

(11) **EP 4 647 326 A1**
(43) Date of publication of application: **12.11.2025**
(21) Application number: 25174593.1
(22) Date of filing: 06.05.2025
(51) Int. Cl.: B62D 25/20, B62D 33/02

(54) **ASSEMBLING KIT FOR ASSEMBLING LOAD BODIES OF VEHICLES**

(30) Priority: 06.05.2024 IT 202400010138
(71) Applicant: Triolo, Erasmo, 10142 Torino (TO) (IT)
(72) Inventor: Triolo, Erasmo, 10142 Torino (TO) (IT)
(74) Representative: Robba, Pierpaolo

(57) **Abstract**

The present invention relates to an assembling kit (100; 110) for assembling a load body (200; 210) to the chassis of a vehicle, comprising two or more longitudinal beams (1a, 1b; 10a, 10b) fixed to the chassis of the vehicle, two or more cross beams (7; 71), fixed to said two or more longitudinal beams (1a, 1b; 10a, 10b) by means of support elements (9; 91) so as to define a ladder frame, two head profiles (11a, 11b; 111a, 111b) and two lateral profiles (15a, 15b; 115a, 115b) connected by means of corner blocks so as to define a perimeter frame, and a deck (19) arranged at least on said ladder frame. According to the invention, said support elements (9; 91) are shaped so as to be able to fix said cross beams (7; 71) to said longitudinal beams (1a, 1b; 10a, 10b) without having to carry out, during assembly of the load body, further processing on such components and to guarantee not only the assembly of said components, but also proper support for the deck (19) and the material that, during use, will be loaded on said deck for transport on road.

## Description

### Technical Field of the Invention

The present invention relates to an assembling kit for assembling load bodies of vehicles. More particularly, the present invention relates to an assembling kit for assembling fixed load bodies to the chassis of a vehicle.

The present invention may be applied, by way of non-limiting example, in the field of assemblies for commercial vehicles for the transport of goods.

The present invention further relates an assembling method for assembling a load body to the chassis of a vehicle using said assembling kit.

### Prior Art

As is known, some vehicles, such as lorries or trucks, are equipped with special containment containers, called 'load bodies', to enable goods to be transported by road.

Typically, the load body is a separate element from the driver's cab. Therefore, many of the vehicles on the road with a load body are not entirely produced by the manufacturers themselves but are derived from chassis (or cabs) on which other companies later install the load body assembly, i.e. all the parts that make up the load body.

Among the most common types of load body assembly is the fixed load body with sideboards, ideal for road transport of palletized and loose materials.

Said fixed load body comprises a metal frame to which a rectangular deck is attached. Said rectangular deck is then closed, at the front, i.e. towards the driver's cab, with a fixed sideboard and, on the other three sideboards, with openable sideboards so as to allow easy loading and unloading of the materials.

Frame, deck and sideboards are in turn made up of many parts and therefore the assembly of fixed load bodies includes a large number of components.

In addition, in order to be fitted to vehicles of different manufacturers and to be able to meet different loading requirements, fixed load bodies can have varying dimensions and structures, while respecting the minimum and maximum roadworthiness of the vehicle. Therefore, the assembly of load bodies also involves, in addition to a large number of components, a wide variety of different components for different vehicles and loading requirements.

As can be easily understood, the large number and variety of components lead to numerous problems when assembling the load bodies to the vehicle chassis, due not only to the need to select, from a multitude of components, those specific to that type of assembly on that type of vehicle, but also to the fact that many components, even if intended for the same assembly, often require further processing, such as bending, cutting parts, drilling holes, etc., in order to fit and fasten them to one another.

Therefore, the assembling of load bodies is a long and complex process, so much so that it requires the presence of expert assemblers to complete the structure of the load body.

In order to try to solve the above problems, some assembling kits have been developed, delivered already packaged and ready for use to the companies that deal with the assembly of the lead body and containing all the components intended for the same assembly.

In these assembling kits, all the components are already supplied designed to be combined with one another in such a way as to simplify and speed up the assembly of the load bodies. However, the assembling kits currently known and currently used still have a large number of components and still require some work that requires certain experience and skills on the part of the assembler.

For example, as disclosed in document DE 102020129504, in order to allow adequate support for the deck, the assembling kit includes - in addition to the cross beams commonly found in these kits - auxiliary elements, made in the form of bars that are mounted perpendicularly between the cross beams, in such a way as to define a support grid for the deck.

Each bar comprises, at its end, a first protruding portion and a second protruding portion and each cross beam has, on its side, a first opening and a second opening.

During assembly, said first and second protruding portions are guided through said first and second openings, respectively, and bent in two opposite directions by means of a tool.

As can be easily understood, this connection of the bars to the cross beam by form-locking must be carried out with care by an expert assembler as the risk of non-optimal locking, due to imprecise bending of the protruding portions, is very high.

Furthermore, the presence of a large number of components present in the known assembling kits makes these kits particularly bulky, difficult to package and transport and does not allow a significant reduction in the time required for the assembly of the load body. It should also be considered that, within the known assembling kits, there are often very similar components, which however must necessarily be mounted to one of the two sides of the body to obtain the correct assembly.

Therefore, the presence of such components can easily lead to incorrect assembly and often involves the need, after having fixed the component in the incorrect position, to dismantle it in order to be able to reposition it in the correct position, thus increasing the assembly time for the load body.

Finally, some of the components found in many popular body kits are quite heavy and therefore require more than one assembler to handle and install them on the vehicle chassis. The main object of the present invention is therefore to overcome the limitations described above by providing an assembling kit for assembling load bodies that allows for simple assembly of the bodies, with precise adaptation of the various components.

A further object of the present invention is to provide an assembling kit for assembling load bodies that reduces assembly times and the risk of errors during assembly.

Furthermore, an object of the present invention is to provide an assembling kit for assembling load bodies that does not require operations such as bending, cutting, drilling or welding of the various components during assembly and in which the components making up the kit can be connected to one another without having to resort to expert assemblers. Finally, an object of the present invention is to provide a method of assembling load bodies to a vehicle chassis using said assembling kit.

These and other objects are achieved with the assembling kit for assembling load bodies and with the method for assembling load bodies to a vehicle chassis as claimed in the appended claims.

### Summary of the Invention

According to the present invention, by 'assembling kit' it is meant the set of mutually combinable components intended for assembling a load body to the chassis of a vehicle. Said assembling kit according to the invention comprises, in a known manner, the following components:
- two or more longitudinal beams intended to be mounted to the chassis of the vehicle, along a direction parallel to the longitudinal axis of said vehicle;
- brackets, suitable for fixing said two or more longitudinal beams to the chassis of said vehicle;
- two or more cross beams, intended to be fixed to said two or more longitudinal beams and oriented perpendicularly with respect to the latter so as to define a ladder frame;
- support elements, wherein each of said support elements is suitable for fixing said two or more cross beams to said two or more longitudinal beams;
- supports, intended to be fixed to said two or more longitudinal beams, near a first end of said two or more longitudinal beams and near a second end, opposite to said first end, of said two or more longitudinal beams;
- two head profiles, consisting of:
   - a first head profile, which is intended to be fixed to the supports arranged near said first end of said two or more longitudinal beams and is oriented perpendicularly with respect to said two or more longitudinal beams;
   - a second head profile, which is intended to be fixed to the supports arranged near said second end of said two or more longitudinal beams and is oriented perpendicularly with respect to said two or more longitudinal beams;
- two lateral profiles, intended to be fixed to said two or more cross beams, at opposite ends of said two or more cross beams, and oriented perpendicularly with respect to the latter;
- four corner blocks, wherein each of said corner blocks is intended to fix one end of said two head profiles to one end of said two lateral profiles so as to define a perimeter frame; and
- a deck, consisting of one or more panels intended to be arranged at least on said ladder frame and fixed at least to said ladder frame.

According to the invention, each of said support elements is provided with:
- at least one first connecting portion, intended to cooperate with one cross beam of said two or more cross beams to connect said support element to said cross beam;
- at least one second connecting portion, perpendicular to said first connecting portion and intended to cooperate with one longitudinal beam of said two or more longitudinal beams to connect said support element to said longitudinal beam;
- at least one flap capable of forming a support base for said one or more panels of the deck. Advantageously, said support elements according to the present invention are shaped not only to allow joining of said two or more longitudinal beams to said two or more cross beams so as to define said ladder frame, but also to allow said ladder frame to guarantee proper support for the deck of the load body and the material that, during use, will be loaded on said deck for transport on road.

According to a first embodiment of the invention, each support element consists of a single component, which performs both the function of joining said two or more longitudinal beams to said two or more cross beams and the function of supporting the deck.

Therefore, in said first embodiment, the support elements eliminate the need to introduce, within the assembling kit, components specifically dedicated to supporting the deck.

In said first embodiment, said support elements are preferably all equal to one another and can therefore be used indifferently to connect any of said two or more cross beams to any of said two or more longitudinal beams.

In this way, the assembling kit according to said embodiment have a smaller number and a smaller variety of components compared to the known assembling kits, thus reducing the time required to assemble the body and the risk of errors during assembly.

Preferably, the first and second connecting portions of the support element have one or more first and second holes, respectively, suitable to be associated to one or more third holes of the cross beam and to one or more fourth holes of the longitudinal beam, respectively.

Each pair of holes allow receiving screws and/or rivets and/or nails, allowing the support elements to fix the cross beams to the longitudinal beams without having to carry out further processing on such components.

Preferably, each of said support elements is configured to be connected to only one of said two or more cross beams.

More preferably, each of said support elements has two flaps which extend from said second connecting portion and away from the center plane of said second connecting portion so that the cross-section of said support element is overall 'V'-shaped.

Alternatively, said two flaps extend from said second connecting portion and perpendicularly to said second connecting portion.

According to a second embodiment of the invention, each of said support elements comprises:
- a connecting element, suitable to define said at least one first connecting portion and said at least one second connecting portion;
- an auxiliary element, suitable to define said flap capable of forming the support base for said one or more panels of the deck.

Therefore, in said second embodiment, the function of joining said two or more longitudinal beams to said two or more cross beams and the function of supporting the deck are guaranteed by two separate components.

In order to define the support element, said connecting element further comprises at least one third connecting portion, preferably parallel to the second connecting portion.

Said third connecting portion is intended to cooperate with said auxiliary element to connect said auxiliary element to said connecting element, allowing to join also said auxiliary element to cross beam and the longitudinal beam (hereinafter referred to as 'fixing cross beam' and 'fixing longitudinal beam') with which the first and second connecting portions are intended to cooperate.

Once the kit according to said second embodiment has been assembled, the set of said auxiliary elements allows for the creation, in combination with said two or more cross beams, of a support grid for the panels, allowing the load body obtained by means of the assembling kit according to said second embodiment to carry a load greater than the one carried by the load body obtained by means of the assembling kit according the first embodiment.

Preferably, said first, second and third connecting portions have one or more first, second and third holes, respectively, suitable to be matched with corresponding one or more fourth, fifth and sixth holes provided on the fixing cross beam, on the fixing longitudinal beam and on the auxiliary element, respectively, so that each pair of holes can receive screws and/or rivets and/or nails.

In this way, said auxiliary elements can be fixed to the fixing cross beams and the fixing longitudinal beams without having to make cuts, welds, additional holes, and without having to bend these components, thus eliminating the risk of breakages, deformations or incorrect connections during assembly of the kit.

Preferably, each auxiliary element is made as a metal sheet bent so as to define the flap capable of forming the support base for the panels.

Preferably, said auxiliary elements are intended to be fixed parallel to the longitudinal beams and perpendicular to the cross beams.

More preferably, said auxiliary elements are intended to be positioned aligned with the longitudinal beams.

Even more preferably, each auxiliary element has a first end intended to be connected, by means of the connecting element, to the fixing cross beam and the fixing longitudinal beam, and a second end, opposite to said first end, capable of interacting with the cross beam adjacent to the fixing cross beam or with the first head profile (when the fixing cross beam is the nearest to said first head profile) or with the second head profile (when the fixing cross beam is the nearest to said second head profile).

In this way, the auxiliary elements define the distance between adjacent cross beams, as well as the distance between the first and/or the second head profile and the cross beams nearest thereto, allowing to increase the accuracy of assembling of the load body, reduce the risk of errors and reduce the time required for assembling the load body.

Furthermore, said auxiliary elements provide rigidity to the ladder frame, allowing to reduce flexion and torsion of the load body, once assembled and mounted to the vehicle, both during acceleration and braking of the vehicle itself.

Regardless of the embodiment, the other components making up the assembling kit according to the present invention can also be mutually associable by means of holes provided in each of said components.

This allows said components to be associated with each other by using screws and/or rivets and/or nails, without having to resort to expert assemblers to carry out the assembling of the load body.

Preferably, said screws and/or rivets and/or nails are also supplied within the assembling kit.

More preferably, said at least one flap of said supporting elements has, at said support base, one or more holes suitable to allow fixing of said one or more panels to said support elements by means of said screws and/or rivets and/or nails so that said support base also defines a fixing base for fixing said one or more panels.

Preferably, said components making up the assembling kit, except for the deck, can be associated with one another by means of screws, even more preferably by means of M8 screws.

Preferably, one or more of the components making up the assembling kit according to the present invention, except for the deck, are components made of sheet metal, preferably press-bent sheet metal, having a thickness of less than 5.0 mm, more preferably, a thickness between 1.5 mm and 2.0 mm.

Advantageously, this makes it possible to obtain an assembling kit the components of which have a weight such that they can be handled, and thus associated with one another, by a single person.

Even more preferably, one or more of the components making up the assembling kit according to the present invention, except for the deck, are made of steel coated with a zinc-aluminum-magnesium alloy and commercially known as Magnelis^{®}.

Advantageously, this makes it possible to obtain an assembling kit the components of which are particularly resistant to external environmental factors such as humidity.

Regardless of the embodiment, said brackets preferably comprise:
- two or more center brackets intended to be connected along said two or more longitudinal beams;
- two or more end brackets intended to be connected near said first end of said two or more longitudinal beams.

More preferably, said two or more center brackets are provided with a slot suitable to allow fixing of said two or more center brackets, by means of screws and/or rivets and/or nails, either to the chassis of a twin-wheeled vehicle or to the chassis of a single-wheeled vehicle. Even more preferably, said two or more end brackets are provided with a slot suitable to allow fixing of said two or more end brackets, by means of said screws and/or rivets and/or nails, to the chassis of said vehicle, either close to the driver's cab of said vehicle or in a rearward position with respect to said driver's cab.

Therefore, advantageously, the assembling kit of the present invention may have identical brackets applicable to different vehicles, thereby reducing the number of components that vary between an assembling kit intended for a type of vehicle and an assembling kit intended for another type of vehicle.

Alternatively, said two or more center brackets are made as a metal sheet bent to an L-shape and are made, preferably, of a high-resistance material capable of guaranteeing a spring-like effect, reducing stresses due to road irregularities or bumps, to which the components making up the assembling kit are subjected once assembled to the chassis of the vehicle.

According to a preferred embodiment of the present invention, also said supports, suitable to allow connection between said two or more longitudinal beams and said two head profiles, are all equal to one another and can therefore be mounted indifferently to any of said two or more longitudinal beams and to any end of said two or more longitudinal beams. In this way, advantageously, the variety of components provided in the same assembling kit as well as the risk of errors during assembly are further reduced.

Preferably, each of said supports has:
- a first securing portion, intended to cooperate with a longitudinal beam of said two or more longitudinal beams to secure said support to said longitudinal beam;
- at least one flap having a second securing portion which is parallel to said first securing portion and is intended to cooperate with either said first head profile or said second head profile to secure said head profile to said support.

More preferably, each of said supports has two flaps, wherein said flaps extend from said first securing portion and away from the center plane of said first securing portion.

Alternatively, when the assembling kit is made in accordance with the second embodiment described above, the supports are divided in:
- first supports, each intended to be fixed near the first end of a longitudinal beam of said two or more longitudinal beams to fix the first head profile to said longitudinal beam and to the auxiliary element (hereinafter referred to as 'first auxiliary element') arranged between said first head profile and the cross beam nearest to said first head profile;
- second supports, each intended to be fixed near the second end of a longitudinal beam of said two or more longitudinal beams to fix the second head profile to said longitudinal beam and to the auxiliary element (hereinafter referred to as 'last auxiliary element') arranged between said second head profile and the cross beam nearest to said second head profile. Preferably, each of said first and second supports has:

- at least one first securing portion, intended to cooperate with a longitudinal beam of said two or more longitudinal beams to secure said support to said longitudinal beam;
- at least one second securing portion, preferably perpendicular to said first securing portion, intended - when present on the first support - to cooperate with the first head profile to secure said first head profile to said first support and - when present on the second support
- to cooperate with the second head profile to secure said second head profile to said second support;
- at least one third securing portion, preferably parallel to said first securing portion, intended - when present on the first support - to cooperate with the first auxiliary element to secure said first auxiliary element to said first support and - when present on the second support - to cooperate with the last auxiliary element to secure said last auxiliary element to said second support.

Preferably, said first supports are shaped differently than said second supports so as to easily distinguish the supports intended for fixing the first head profile and the supports intended for fixing the second head profile.

Regardless of the embodiment, said four corner blocks are preferably equal in pairs, defining two pairs of corner blocks: the two corner blocks belonging to the same pair are intended to connect the ends of said two head profiles and of said two lateral profiles intended to be located on the diagonal of the perimeter frame.

Preferably, said four corner blocks are all equal to one another so that they can be used indifferently to fix the ends of said two head profiles to the ends of said two lateral profiles. Preferably, each of said corner blocks comprises an angular element, intended to associate an end of said two head profiles with one end of said two lateral profiles, and a tubular element, suitable to allow insertion, inside it, of stands for any accessory elements of the load body, such as pole-holders of the light type or pole-holders of the reinforced type.

According to a preferred embodiment of the present invention, said one or more panels are intended to be positioned, and possibly fixed, also on said perimeter frame.

Preferably, according to this preferred embodiment, said head profiles and/or said lateral profiles have a seat intended to accommodate a portion of the perimeter edge of said one or more panels.

Advantageously, this makes it possible to precisely position said one or more panels with respect to said perimeter frame (and therefore also with respect to the ladder frame associated therewith).

According to a preferred embodiment of the present invention, said assembling kit further comprises a sideboard assembly, consisting of several elements and inserted inside said kit, preferably, in a disassembled configuration so as not to cause considerable increase in the overall size of the kit.

Preferably, said sideboard assembly comprises a fixed sideboard, intended to be rigidly fixed to said first head profile, and three openable sideboards, intended to be pivotally connected to said second head profile and said two lateral profiles.

For this purpose, said assembling kit further comprises, preferably, hinges, intended to be fixed to said second head profile and said two lateral profiles, and said three openable sideboards are provided with respective pins, intended to be inserted into said hinges.

More preferably, said hinges are made as universal hinges, suitable to be mounted, indifferently, to said second head profile or to any of said two lateral profiles.

Preferably, when said three openable sideboards are provided, said assembling kit further comprises accessory elements, such as bumper elements, intended to be fixed to said second head profile and/or to said two lateral profiles so as to cushion, following rotation of said three sideboards, any impact between said sideboards and the other components of the assembling kit or of the chassis of the vehicle.

According to a preferred embodiment of the present invention, said second head profile and/or said two lateral profiles are provided with electrical components intended to be connected to a lighting system.

The assembling kit according to the present invention may comprise further accessory elements, for example:
- cable-tensioning hooks, intended to be mounted at said first end and/or of said second end of said two or more cross beams;
- rings or load-securing hooks, intended to be fixed to said head profiles and/or said two lateral profiles;
- one or more toolboxes;
- two or more mudguards;
- pole-holders of the light type or the reinforce type.

Therefore, the assembling kit according to the invention has the great advantage, compared to known assembling kits, of reducing the number and variety of components present inside it, making the assembly of the load body even simpler, quicker and easier than with known assembling kits, so much so that it can be carried out - after a quick training or by following simple instructions - even by inexperienced personnel.

In addition, the reduction in the variety of components present in the kit and the total absence of welding during assembly also allows for easy management of spare components.

Therefore, according to another aspect of the present invention, there is provided an assembling method for assembling a load body to the chassis of a vehicle by means of the assembling kit described above.

Said assembling method according to the present invention comprises the following steps:
a) providing said two or more longitudinal beams;
b) providing said brackets;
c) providing said two or more cross beams;
d) providing said support elements;
e) providing said supports;
f) providing said two head profiles;
g) providing said two lateral profiles;
h) providing said four corner blocks;
i) providing said one or more panels.

Said method further comprises the steps of:
j) fixing said two or more longitudinal beams to the chassis of said vehicle by means of said brackets so that said two or more longitudinal beams are arranged along a direction parallel to the longitudinal axis of said vehicle;
k) fixing said two or more cross beams to said two or more longitudinal beams by means of said support elements so that said two or more cross beams are perpendicular to said two or more longitudinal beams, thus defining said ladder frame;
l) fixing said two head profiles to said two or more longitudinal beams by means of said supports so that said head profiles are perpendicular to said two or more longitudinal beams and so that each of said two head profiles is fixed near opposite ends of said two or more longitudinal beams;
m) fixing said two lateral profiles to said two or more cross beams and to said two head profiles so that said two lateral profiles are perpendicular to said two head profiles, wherein the connection between said two lateral profiles and said two head profiles is achieved by means of said four corner blocks, said two head profiles and said two lateral profiles defining said perimeter frame;
n) arranging said one or more panels at least on said ladder frame so that said one or more panels are supported at least on said support elements;
o) fixing said one or more panels at least to said ladder frame so that said one or more panels define the deck of said load body.

Said method may further comprise the steps of:
p) providing said sideboard assembly;
q) connecting said sideboard assembly to said perimeter frame.

Furthermore, if said sideboard assembly consists of several elements and is provided in a disassembled configuration inside the assembling kit, the method may further comprise a step of mounting said sideboard assembly.

In addition, said method may further comprise the steps of:
r) providing accessory elements;
s) connecting said accessory elements to said ladder frame and/or to said perimeter frame and/or to said deck.

This sequence of steps should not be interpreted in a limiting sense and the steps described above could be performed in any sequence.

In fact, advantageously, the assembling kit according to the present invention allows the components to be associated with one another in any order, i.e. following any assembly sequence.

This further distinguishes the assembling kit according to the invention from the known assembling kits, during assembly of which, instead, the assembler is required to follow a precise sequence, forcing him to frequently disassemble and reassemble the components when this sequence is not respected.

### Brief Description of the Drawings

Further advantages and features of the present invention will become apparent from the following detailed description of some preferred embodiments of the invention, given by way of non-limiting example with reference to the annexed drawings, in which:
- Figures 1 and 2 show an exploded view of the components making up the assembling kit according to a first embodiment of the present invention, without and with sideboards, respectively;
- Figure 3 shows a load body made by means of the assembling kit of Figures 1 and 2;
- Figure 4 shows a support included in the assembling kit of Figures 1 and 2;
- Figure 5a shows a corner block included in the assembling kit of Figures 1 and 2 manufactured according to a first embodiment;
- Figure 5b shows a corner block included in the assembling kit of Figures 1 and 2 manufactured according to an alternative embodiment;
- Figure 6 shows the second lateral profile included in the assembling kit of Figures 1 and 2;
- Figure 7 shows the cross-section of the second lateral profile of Figure 6;
- Figure 8 shows a support element included in the assembling kit of Figures 1 and 2;
- Figure 9 shows a hinge included in the assembling kit of Figures 1 and 2;
- Figure 10a shows a center bracket included in the assembling kit of Figures 1 and 2 and manufactured according to a first embodiment;
- Figure 10b shows a center bracket included in the assembling kit of Figures 1 and 2 and manufactured according to an alternative embodiment;
- Figure 10c shows two corner blocks of Figure 5b with which a cab guard is associated;
- Figure 11 shows an exploded view of the set of components making up the assembling kit according to a second embodiment of the present invention;
- Figure 12 shows a first perspective view from below of a fixed load body obtained by means of the assembling kit of Figure 11;
- Figure 13 shows a first perspective view from below of the fixed load body of Figure 12.

### Detailed Description of Some Preferred Embodiments of the Invention

In the following description of some preferred embodiments of an assembling kit for assembling load bodies, reference will be made to an assembling kit for assembling a fixed load body, provided with openable sideboards, to the chassis of a commercial vehicle. However, such embodiments should not be construed in a limiting manner and the assembling kit according to the invention could be used for the making of other types of load bodies and/or for load bodies intended for other types of vehicles.

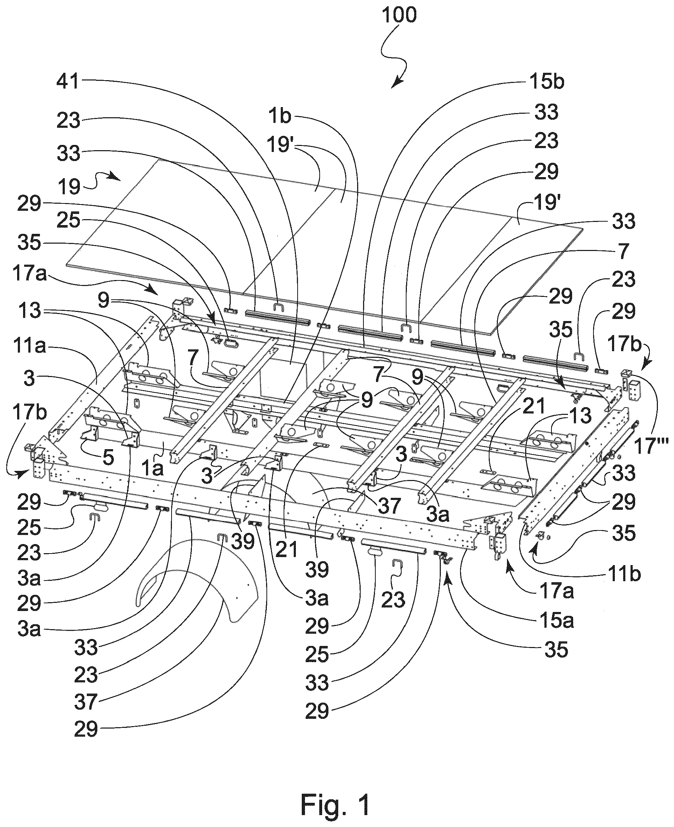

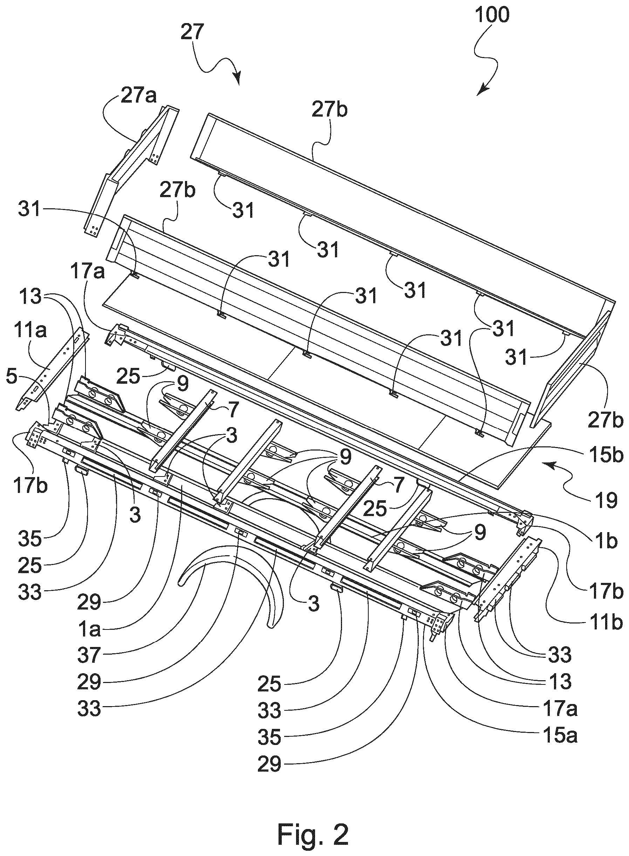

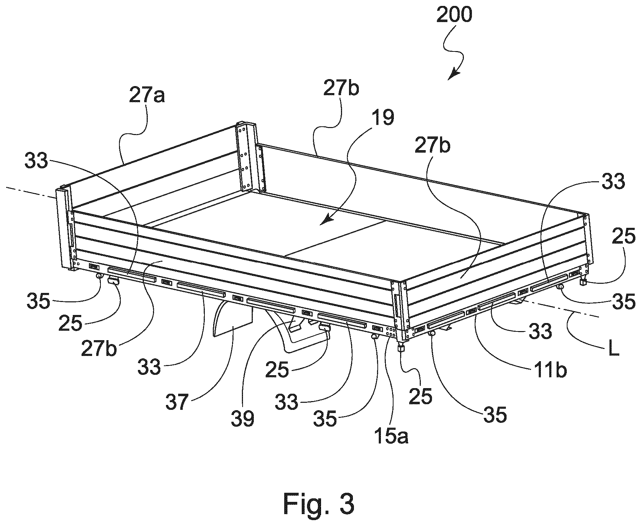

Figures 1 and 2 show the set of mutually combinable components that make up the assembling kit 100 according to a first embodiment and intended for assembling a fixed load body 200, which is illustrated in a mounted and ready-to-use state in Figure 3.

When describing said load body 200, the term 'front' refers to a portion of the load body 200 near the driver's cab of the vehicle, whereas the term 'rear' refers to a portion of the load body 200 away from said driver's cab.

The 'front end' of the load body 200 is shown on the left side of Figure 3, whereas the 'rear end' of the load body 200 is shown on the right side of Figure 3.

Still referring to Figure 3, said load body 200 extends along a longitudinal axis L, whose direction runs back and forth between said front end and said rear end.

As can be seen from Figures 1 and 2, said assembling kit 100 comprises, in a known manner, a first longitudinal beam 1a and a second longitudinal beam 1b, which are intended to be mounted to the chassis of the vehicle, along a direction parallel to the longitudinal axis of said vehicle (corresponding to the longitudinal axis L of the load body 200), distanced from each other and arranged symmetrically on the two opposite sides relative to said longitudinal axis L.

According to the illustrated embodiment, said longitudinal beams 1a and 1b are made as metal sheets bent so that each of said longitudinal beams 1a and 1b has a cross-section overall shaped like a 'C', wherein the open portion of said 'C' is intended to face said longitudinal axis L.

In a preferred embodiment, the metal sheet forming said longitudinal beams 1a and 1b might be further bent at one or both ends of the overall 'C'-shaped cross-section so as to increase the rigidity of said longitudinal beams.

Each of said longitudinal beams 1a and 1b has a first end, intended to be positioned at the front end of the load body 200, and a second end, intended to be positioned at the rear end of the load body 200.

In a known manner, said assembling kit 100 comprises brackets suitable for fixing said two or more longitudinal beams 1a and 1b to the chassis of said vehicle.

In particular, in order to fix said first longitudinal beam 1a to the chassis of said vehicle, the assembling kit 100 comprises center brackets 3 and an end bracket 5.

Said center brackets 3 are intended to be fixed to said first longitudinal beam 1a along the longitudinal extension of said longitudinal beam 1a, parallel to the longitudinal axis L.

Said end bracket 5 is intended to be fixed at said first end of said longitudinal beam 1a. Similarly, the second longitudinal beam 1b, too, has corresponding center brackets and an end bracket (not shown) that are intended to be fixed along the longitudinal extension of said longitudinal beam 1b and at said first end of said longitudinal beam 1b, respectively.

As can be seen from Figures 1 and 2, said assembling kit 100 comprises, in a known manner. Cross beams 7, intended to be fixed to said two or more longitudinal beams 1a and 1b and oriented perpendicularly with respect to the latter so as to define a ladder frame.

In this regard, said assembling kit 100 further comprises support elements 9, wherein each of said support elements 9 is suitable to fix said two or more cross beams 7 to said two or more longitudinal beams 1a and 1b, as will be described in more detail below.

These cross beams 7, too, are made as metal sheets bent so that each of said cross beams 7 has a cross-section overall shaped like a 'C'.

Said assembling kit 100 may further comprise cable-tensioning hooks (not shown), intended to be mounted at a first end and at a second end, opposite to said first end, of said cross beams 7.

Said assembling kit 100 further comprises two head profiles, consisting of:
- a first head profile 11a, which is intended to be fixed to said longitudinal beams 1a and 1b, near said first end of said two longitudinal beams 1a and 1b, and is oriented perpendicularly with respect to said two longitudinal beams 1a and 1b;
- a second head profile 11b, which is intended to be fixed to said longitudinal beams 1a and 1b, near said second end of said two longitudinal beams 1a and 1b, and is oriented perpendicularly with respect to said two longitudinal beams 1a and 1b.

In this regard, said assembling kit 100 further comprises supports 13, intended to fix said first head profile 11a to said first end of said two longitudinal beams 1a and 1b and intended to fix said second head profile 11b to said second end of said two longitudinal beams 1a and 1b.

According to said first embodiment, said supports 13 are all equal to one another so that they can be used indifferently on any of the two longitudinal beams 1a, 1b and on any ends of said longitudinal beams, thereby limiting the variety of components present in the assembling kit 100 as well as the risk of errors during assembly.

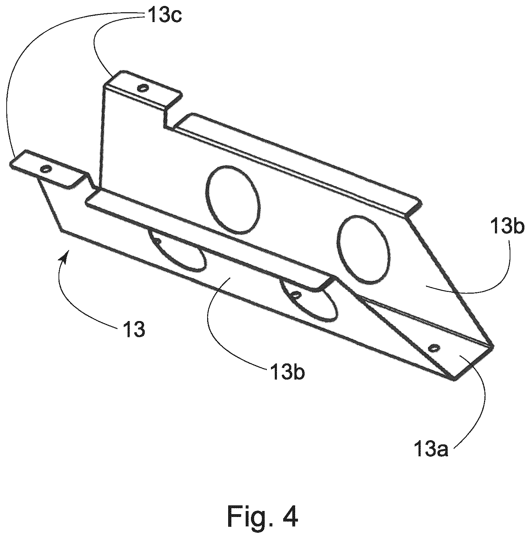

In particular, as can be seen from Figure 4, each of said supports 13 has:
- a first securing portion 13a, intended to cooperate with a longitudinal beam of said first longitudinal beam 1a and said second longitudinal beam 1b to secure said support 13 to said longitudinal beam;
- two flaps 13b, wherein each of said flaps 13b extends from said first securing portion 13a and away from the center plane of said first securing portion 13a.

Each of said flaps 13b has a second securing portion 13c, parallel to said first securing portion 13a and intended to cooperate with either said first head profile 11a or said second head profile 11b to secure said head profile to said support 13.

Said two head profiles 11a and 11b are made as metal sheets bent so that each of said profiles has a cross-section overall shaped like a 'C'.

Said assembling kit 100 further comprises two lateral profiles, consisting of:
- a first lateral profile 15a, intended to be fixed to said cross beams 7, at a first end of said cross beams 7, and oriented perpendicularly with respect to the latter, i.e. parallelly to the longitudinal axis L;
- a second lateral profile 15b, intended to be fixed to said cross beams 7, at a second end, opposite to said first end, of said cross beams 7, and oriented perpendicularly with respect to the latter, i.e. parallelly to the longitudinal axis L.

In this regard, said two lateral profiles 15a and 15b are made as metal sheets bent so that each of said profiles has a cross-section overall shaped like a 'C', wherein the open portion of said 'C' is intended to face said longitudinal axis L.

In particular, the cross-section of said first lateral profile 15a and of said second lateral profile 15b defines a seat inside which said first ends of said cross beams 7 and said second ends of said cross beams 7, respectively, can be inserted during assembly of the load body 200.

Said two lateral profiles 15a and 15b are also intended to be coupled to said two head profiles 11a and 11b in order to define a perimeter frame around said ladder frame.

In this regard, said assembling kit 100 further comprises four corner blocks, wherein each of said corner blocks is intended to fix, as shown in Figures 1 and 2, one end of each of said two head profiles 11a and 11b to one end of each of said two lateral profiles 15a and 15b.

In particular, in the embodiment illustrated in Figures 1 - 3, said four corner blocks are equal in pairs, defining two pairs of corner blocks 17a and 17b: the two corner blocks belonging to the same pair are intended to connect the ends of said two head profiles 11a e 11b and of said two lateral profiles 15a and 15b intended to be located on the diagonal of the perimeter frame.

In particular, said first pair of corner blocks 17a allows to fix the first the first head profile 11a to the second lateral profile 15b and to fix the second head profile 11b to the first lateral profile 15a, whereas said second pair of corner blocks 17b allows to fix the first head profile 11a to the first lateral profile 15a and the second head profile 11 to the second lateral profile 15b.

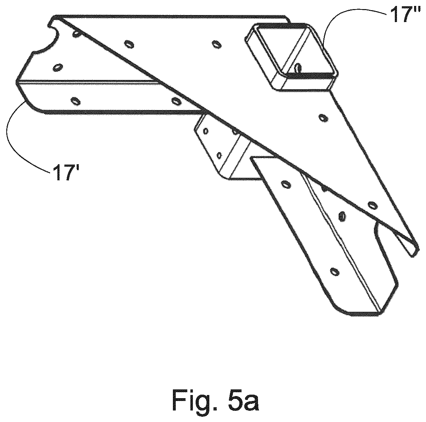

As shown in Figure 5a, each of said corner blocks comprises and angular element 17', intended to fix said ends of the two head profiles 11a and 11b to said ends of the two lateral profiles 17a and 17b, and a tubular element 17", welded to said angular element 17'. Said tubular element 17" is shaped to allow insertion, inside it, of stands for any accessory elements (not shown) associatable with the load body 200, such as pole-holders of the light type or pole-holders of the reinforced type.

In the absence of such stands, a plug 17"', visible in Figure 1, for closing said tubular element 17" may be provided.

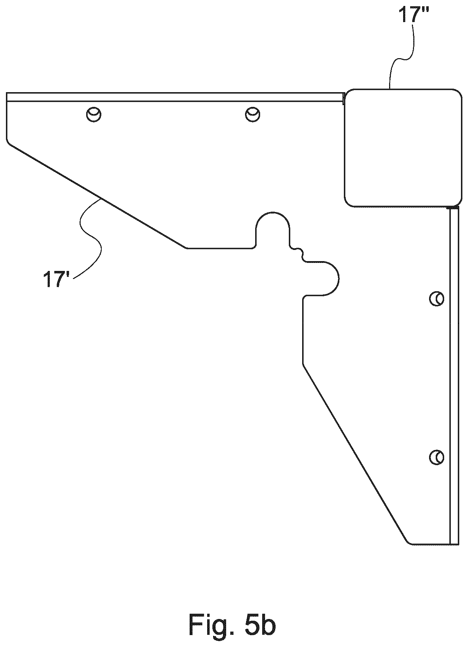

In an alternative embodiment, illustrated in Figure 5b, said tubular element 17" is positioned at the corner of said angular element 17' so as to be symmetrical to said angular element 17'. Thanks to this configuration it is possible to obtain four corner blocks all equal to one another, which can be used indifferently to connect the ends of said two head profiles 11a and 11b to the ends of said two lateral profiles 15a and 15b.

Referring again to Figures 1 - 3, said assembling kit 100 further comprises panels 19' intended to be arranged on and fixed to said ladder frame and said perimeter frame in order to define a deck 19.

In this regard, the sheet metal forming said two head profiles 11a and 11b and said two lateral profiles 15a and 15b is further bent, so as to define a seat suitable to receive a portion of the perimeter edge of said panels 19'.

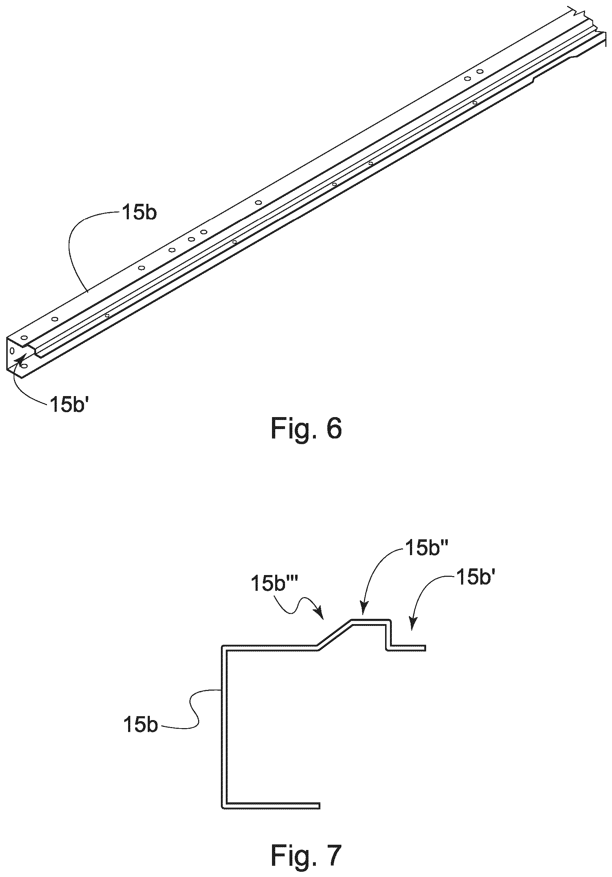

Figures 6 and 7 show the second lateral profile 15b and the cross-section of said profile, respectively. As can be seen from these Figures, the sheet metal of said second lateral profile 15b is bent so as to define, in addition to the seat 15b' for positioning the perimeter edge of said panels 19', also a raised portion 15b" and a tapered portion 15b"'.

Similarly, said first lateral profile 15a, too, has, in addition to the seat, also a raised portion and a tapered portion.

Advantageously, said tapered portions provided on said lateral profiles 15a and 15b allow facilitating the positioning and insertion of said panels 19' into the corresponding seats.

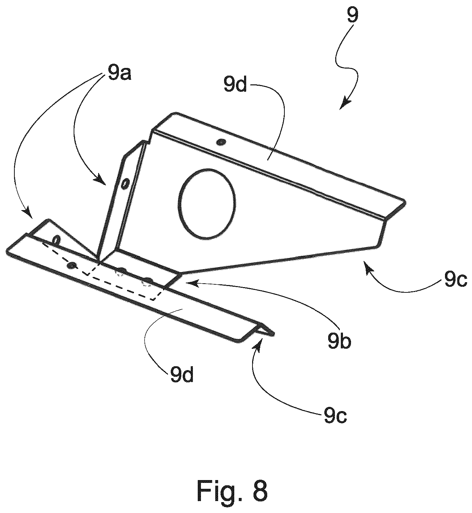

According to said first embodiment of the invention, each of said support elements 9, as can be seen from Figure 8, is provided with:
- two first connecting portions 9, both intended to cooperate with one of said cross beams 7 to connect said support element 9 to said cross beam 7;
- a second connecting portion 9b, perpendicular to said first connecting portion 9a and intended to cooperate with said first longitudinal beam 1a or said second longitudinal beam 1b to connect said support element 9 to said first longitudinal beam 1a or said second longitudinal beam 1b;
- two flaps 9c, wherein each of said flaps 9c extends from said second connecting portion 9b and away from the center plane of said second connecting portion 9b.

Therefore, the cross-section of said support elements 9 is overall 'V'-shaped.

Each of said flaps 9c has a portion, parallel to the second connecting portion 9b, capable of forming a support base 9d for said panels 19'.

Advantageously, the support elements 9 thus made not only allow joining of said cross beams 7 to said longitudinal beams 1a and 1b, but also allow the ladder frame obtained from such joining to guarantee proper support for the panels 19' forming the deck 19, as well as for the material which, in use, will be loaded onto said deck 19.

Advantageously, said support elements 9 are all equal to one another and can therefore be used indifferently to connect any of said cross beams 7 to any of said longitudinal beams 1a and 1b, thereby reducing the risk of errors during assembly compared to currently known kits.

Advantageously, all the components described above and making up the assembling kit 100 are mutually associatable by means of holes provided in each of said components.

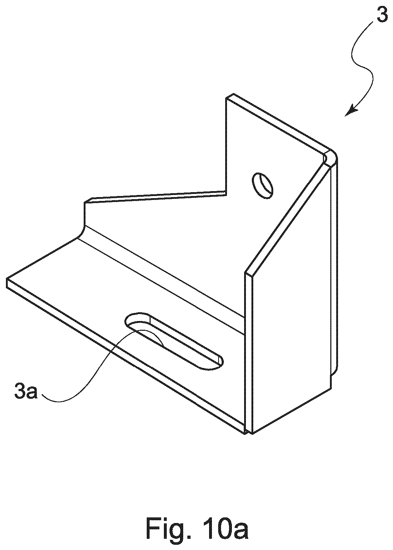

This allows to associate said components with one another by means of screws and/or rivets and/or nails without having to make holes, cuts or welds during assembly of load body 200. In particular, as can be better seen from Figure 10a, each center bracket is provided with a slot 3a suitable to allow fixing of said center brackets 3, by means of screws and/or rivets and/or nails, to the chassis of said vehicle.

Advantageously, by varying the position of insertion of said screws and/or rivets and/or nails in relation to said slot 3a it is possible to fix said center brackets 3, and consequently said longitudinal beams 1a and 1b, either to the chassis of a twin-wheeled vehicle or to the chassis of a single-wheeled vehicle.

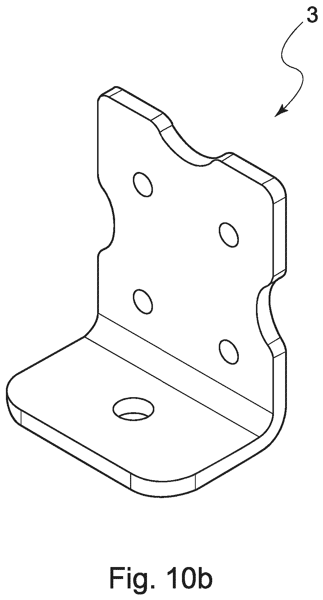

In an alternative embodiment, shown in Figure 10b, said center brackets 3 are made as a metal sheet bent in an 'L' shape.

Furthermore, also the seats provided on said two head profiles 11a and 11b and/or on said two lateral profiles 15a and 15b have holes suitable to allow fixing of the perimeter edge of said panels 19' to said seats by means of screws and/or rivets and/or nails.

In addition, also the support base 9d provided on the flaps 9c of the support elements 9 has holes suitable to allow fixing of the panels 19' to said support elements 9 by means of screws and/or rivets and/or nails so that said support base 9d also defines a fixing base for fixing said panels 19'.

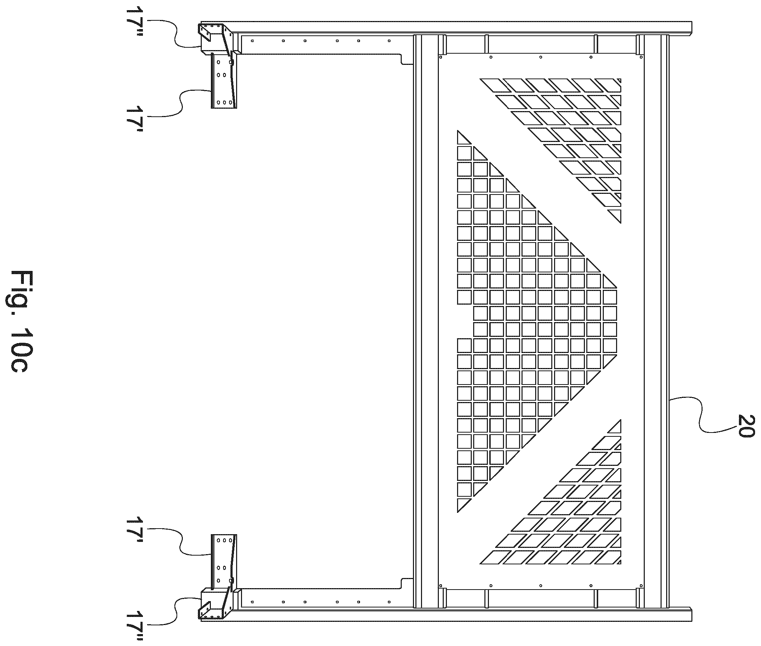

Furthermore, also the corner blocks are provided, preferably, with one or more holes suitable to allow fixing, by means of screws and/or nails and/or rivets, of accessory elements, such as a cab guard 20, as shown in Figure 10c.

As far as the materials are concerned:
- said panels 19' preferably are multi-layer panels comprising one or more birch layers on which an aluminum layer is applied;
- said corner blocks, being subjected to welding before being inserted in said assembling kit 100, are preferably made of galvanized steel sheet;
- the other components making up said assembling kit 100 are preferably made of steel sheet coated with a zinc-aluminum-magnesium alloy and commercially known as Magnelis^{®}. In the illustrated embodiment, the sheet metal of which said corner blocks and all the other components are made, except for the deck, has a reduced thickness, between 1.5 mm and 2.0 mm.

Due to the reduced thickness of the sheet metal, in order to ensure a secure connection between the different components, said assembling kit 100 may further comprise reinforcement plates.

In particular, reinforcement plates 21 may be provided, each interposed between said longitudinal beams 1a and 1b and said cross beams 7 and between said longitudinal beams 1a and 1b and said support elements 9.

As can be seen from Figure 1, said assembling kit 100 further comprises accessory elements made as load-securing rings or hooks 23, intended to be connected to said two head profiles 11a, 11b and said two lateral profiles 15a, 15b.

Furthermore, said second head profile 11a and said two lateral profiles 15a, 15b contained in the assembling kit 100 are provided with electrical components intended to be connected to a lighting system.

In this regard, said assembling kit 100 comprises other accessory elements, such as, for example, clearance lights 25, intended to be connected to said electrical components.

As shown in Figure 2, said assembling kit 100 further comprises a sideboard assembly 27 consisting of a fixed sideboard 27a, intended to be rigidly fixed to said first head profile 11a, and three openable sideboards 27b, intended to be pivotally connected to said second head profile 11b and to said two lateral profiles 15a and 15b.

In this regard, said assembling kit 100 further comprises hinges 29, intended to be fixed to said second head profile 11b and said two lateral profiles 15a and 15b, and said three openable sideboards 27b are provided with respective pins 31 intended to be inserted into said hinges 29.

Said hinges 29 are made as universal hinges, suitable to be mounted, indifferently, to said second head profile 11b or to any of said two lateral profiles 15a and 15b.

According to a preferred embodiment, considering the two openable sideboards 27b intended to be associated with the two lateral profiles 15a and 15b, the use of said universal hinges 29 allows to connect, indifferently, said two openable sideboards 27b to said first lateral profile 15a or said second lateral profile 15b.

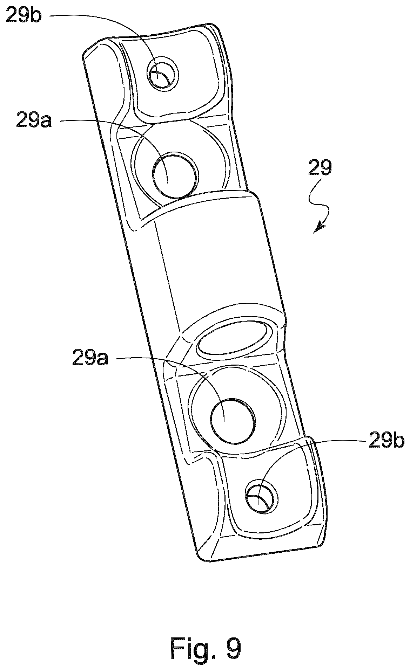

As can be seen from Figure 9, said hinges 29 comprise two fixing holes 29a matching two holes on said second head profile 11b or on any of said two lateral profiles 15a and 15b, to allow fixing, by means of screws and/or nails and/or rivets, of said hinges 29 to said profiles. Said hinges 29 further comprise two anti-theft and anti-slipping holes 29a, matching two holes on said second head profile 11b or on any of said two lateral profiles 15a and 15b, and suitable to prevent, by means of the interaction between said holes 29b and respective screws and/or nails and/or rivets, slipping of the pins 31 out of said hinges 29 and theft of said openable sideboards 27b.

Said fixed sideboard 27a and said openable sideboards 27b are inserted inside said assembling kit in a disassembled configuration so as not to cause considerable increase in the overall size of the kit.

Said assembling kit 100 comprises additional accessory elements such as, for example, bumper elements, intended to be fixed to said second head profile 11b and said two lateral profiles 15a and 15b so as to cushion, following rotation of said openable sideboards 27b, any impact between said sideboards and the other components of the load body 200 or of the chassis of the vehicle.

In particular, said bumper elements are divided in elongated pads 33 and supports with rubber pads 35.

Finally, said assembling kit 100 comprises accessory elements such as, for example, two mudguards 37, fixing plates 39 intended to fix each of said two mudguards 37 to said ladder frame, and a toolbox 41.

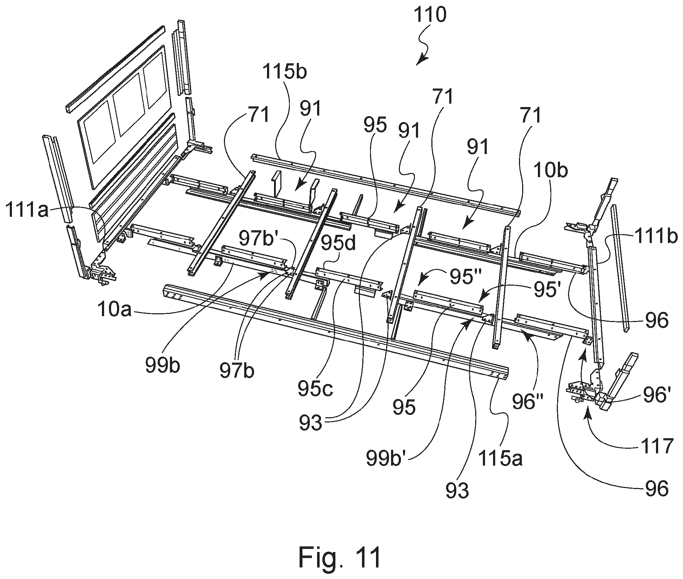

Turning to Figure 11, the set of components is illustrated, mutually associatable, making up the assembling kit according to a second embodiment of the invention, indicated by reference numeral 110.

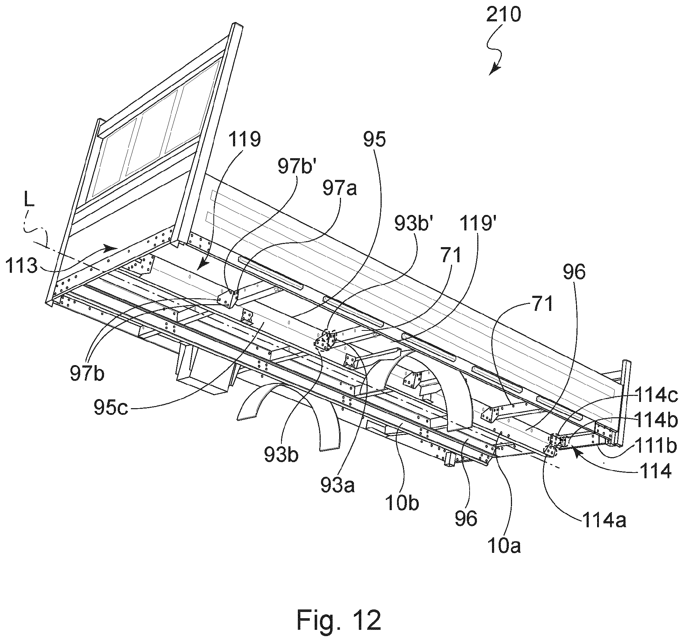

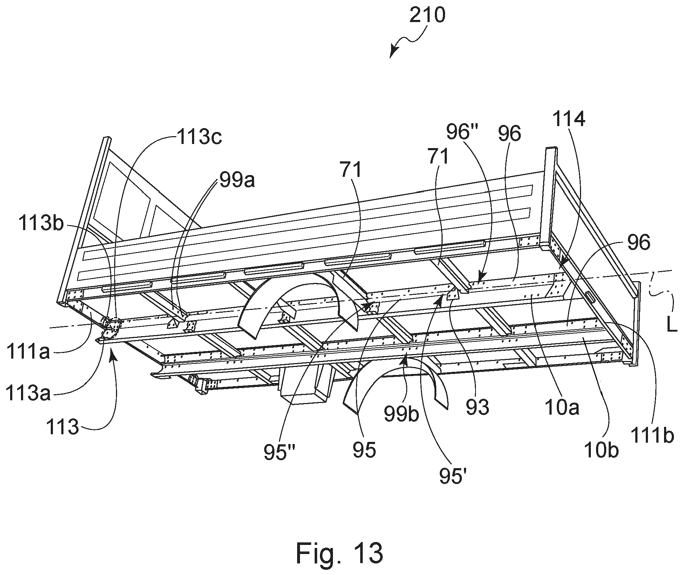

Such components are intended for assembling a fixed load body 210, which is shown in a mounted and ready-to-use state in Figures 12 and 13.

Similarly to the first embodiment, said assembling kit 110 comprises: a first longitudinal beam 10a, a second longitudinal beam 10b, cross beams 71 intended to be fixed to said first and second longitudinal beams, thus defining a ladder frame, a first and a second head profile 111a and 111b intended to be fixed near the opposite ends of said longitudinal beams, two lateral profiles 115a and 115b intended to be fixed to the ends of said first and second head profiles by means of corner blocks 117, thus defining a perimeter frame, and panels 119' intended to be positioned and fixed to said ladder frame and said perimeter frame to define a deck 119.

In particular, the structure and operation of the components listed above are substantially identical to those described with reference to the first embodiment, and will therefore not be described again in detail.

In said second embodiment, unlike the first embodiment, the assembling kit 110 comprises support elements 91, each consisting of two components: a connecting element 93 and an auxiliary element 95.

Referring to Figure 12, each connecting element 93 comprises:
- a first connecting portion 93a intended to cooperate with one of said cross beams 71 to connect said connecting element 93 to said cross beam 71, hereinafter referred to as 'fixing cross beam';
- a second connecting portion 93b, perpendicular to said first connecting portion 93a and intended to cooperate with said first longitudinal beam 10a or said second longitudinal beam 10b to connect said connecting element 93 to one of said first and second longitudinal beams 10a, 10b, hereinafter referred to as 'fixing longitudinal beam';
- a third connecting portion 93b', parallel to the second connecting portion 93b, intended to cooperate with said auxiliary element 95 to connect said auxiliary element 95 to said connecting element 93.

Accordingly, each connecting element 93 allows to fix the auxiliary 95, the fixing cross beam and the fixing longitudinal beam.

As can be seen from Figures 11 - 13, said connecting element 93 is made as a metal sheet bent so as to obtain a metal sheet first side and second side substantially perpendicular to each other: the first connecting portion 93a is provided on the first side and the second and third connecting portions 93b, 93b' are provided on the second side.

It is evident that, in alternative embodiments, said connecting element 93 might be made by means of a metal sheet having a different shape or in any other way that allows joining of the auxiliary element 95, the fixing cross beam and the fixing longitudinal beam.

To join, during assembly of the load body, the auxiliary element, the fixing cross beam and the fixing longitudinal beam, without having to carry out further processing on such components, a connection by means of screws is provided.

For this purpose, said first, second and third connecting portions 93a, 93b, 93b' have one or more first, second and third holes 97a, 97b, 97b', respectively, suitable to be associated with respective one or more fourth, fifth and sixth holes 99a, 99b, 99b' provided on the fixing cross beam, on the fixing longitudinal beam and on the auxiliary element 95, respectively, so that each pair of holes can receive a screw.

In the illustrated embodiment, the connecting elements 93 allowing fixing to the first longitudinal beam 10a are all equal to one another so that they can be used indifferently to fix the fixing cross beam and the auxiliary element 95 to said first longitudinal beam 10a. Similarly, the connecting elements 93 allowing fixing to the second longitudinal beam 10b are all equal to one another, so that they can be used indifferently to fix the fixing cross beam and the auxiliary element 95 to said second longitudinal beam 10b.

Alternatively, all the connecting elements may be equal to one another.

Said auxiliary element 95 has a flap 95c capable of forming a support base 95d for the panels 119'.

In order to provide said flap 95c and said support base 95d, in the illustrated embodiment said auxiliary element 95 is made as a metal sheet bent so as to obtain a substantially 'C'-shaped cross-section: the metal sheet portion located at the central part of said 'C' defines the flap 95c, whereas the metal sheet portion located at the end of said 'C' intended to be in contact with the panels 119' defines the support base 95d.

During assembly, the open portion of said 'C' is preferably oriented towards the longitudinal axis L of the load body 210.

It is evident that, in an alternative embodiment, said auxiliary element may be made in any way that provides said flap and said support base. For example, said auxiliary element might be made by means of a metal sheet bent so as to obtain a substantially 'L'-shaped cross-section, wherein the metal sheet portion at the first arm of said 'L' defines the flap 95c and the metal sheet portion at the second arm of said 'L' defines the support base 95d.

As can be seen from Figures 12 - 13, said auxiliary elements 95 all have the same length and are intended to be fixed parallel and aligned to the respective fixing longitudinal beam, therefore being perpendicular to the cross beams 71.

In particular, the auxiliary elements 95 intended to be aligned to the first longitudinal beam 10a are all equal to one another so that they can be mounted at the first longitudinal beam and fixed indifferently to any cross beam 71.

Similarly, the auxiliary elements 95 intended to be aligned to the second longitudinal beam 10b are all equal to one another so that they can be mounted at the second longitudinal beam and fixed indifferently to any cross beam 71.

Alternatively, said auxiliary elements 95 might all be equal to one another so that they can be mounted indifferently to any longitudinal beam 10a, 10b and fixed indifferently to any cross beam 71.

As illustrated in Figures 12 - 13, each auxiliary element 95 has a first end 95' intended to be connected, by means of the respective connecting element 93, to the fixing cross beam and to the fixing longitudinal beam, and a second end 95", opposite to said first end, intended to interact with the cross beam adjacent to the fixing cross beam or to be fixed to the first head profile 111a (as will be described in more detail below) when the fixing cross beam is the nearest to said first head profile 111a.

In addition, the assembling kit 210 according to said second embodiment comprises two additional auxiliary elements 96.

Said additional auxiliary elements 96, similarly to the auxiliary elements 95, are intended to be mounted at the first and second longitudinal beams 10a, 10b, respectively.

Said additional auxiliary elements 96, however, unlike the auxiliary elements 95, are not fixed to a cross beam and a longitudinal beam by means of the connecting element 93 but are fixed to the second head profile 111b, as will be described in more detail below.

In particular, said additional auxiliary elements 96 have a first end 96' intended to be connected to the second head profile 111b, and a second end 96", opposite to said first end, intended to interact with the cross beam 71 nearest to said second head profile 111b.

In the assembling kit according to said second embodiment, said auxiliary elements 95 and said additional auxiliary elements 96 are already supplied in the length suitable for making the load body 210.

Therefore, the auxiliary elements 95 define the spacing between the cross beams 71 and the distance between cross beam and first head profile 111a, whereas the additional auxiliary elements 96 define the distance between cross beam and second head profile 111b, allowing to increase the precision of assembling the load body 210 compared to known assembling kits and also compared to the assembling kit according to the first embodiment.

Furthermore, also said additional auxiliary elements 96 are made as a metal sheet bent so as to obtain a 'C'-shaped cross-section such as to define a flap and a support base for the panels 119'.

Therefore, once the assembly of said assembling kit 110 is completed, the set of said auxiliary elements 95 and said additional auxiliary elements 96 defines, together with the cross beams 71, a support grid for the panels 119'.

This makes it possible for the load body 210 to carry a greater load compared to the load body 200 obtained with the assembling kit according to the first embodiment.

However, it is clear that the additional auxiliary elements 96 could be shaped differently than the auxiliary elements 95.

Furthermore, in an alternative embodiment, the auxiliary elements 95 could also be interposed, in place of the additional auxiliary elements 96, between the second head profile 111b and the cross beam nearest to said profile, and could be fixed to said cross beam by means of the connecting element 93.

In another alternative embodiment, the assembling kit may comprise, besides the additional auxiliary elements 96, second additional auxiliary elements interposed between the first head profile 111a and the cross beam located nearest to said head profile 111a.

Returning to the illustrated embodiment, the assembling kit 110 comprises first supports 113 and second supports 114.

Similarly to the first embodiment, each of said first and second supports 113, 114 is intended to be fixed near the first end of the first or second longitudinal beam 10a, 10b to fix the first head profile 111a and the second head profile 111b, respectively, to said longitudinal beam. For this purpose, each of said first and second supports 113, 114 comprises:
- a first securing portion 113a, 114a, intended to cooperate with one of the first and second longitudinal beams 10a, 10b to fix the respective support to said longitudinal beam;
- a second securing portion 113b, 114b, perpendicular to the first fixing portion provided on the respective support, intended - when present on said first support 113 - to cooperate with the first head profile 111a to secure said first head profile 111a to said first support 113 and
- when present on the second support 114 - to cooperate with the second head profile 111b to secure said second head profile 111b to said second support 114.

However, unlike the first embodiment, said first supports 113 also allow to fix the first head profile 111a to the auxiliary 95 arranged between said first head profile 111a and the cross beam 71 (or to the second additional auxiliary element when present in place of the auxiliary element 95).

Said second supports 114, instead, also allow to fix the second head profile 111b to the additional auxiliary element 96 (or to the auxiliary element 95 when provided between the second head profile 111b and the cross beam 71 in place of the additional auxiliary element 96).

In fact, each of said first and second supports 113, 114 further comprises a third securing portion 113c, 114c, parallel to the first securing portion present on the respective support, intended - when present on the first support 113 - to cooperate with the auxiliary element 95 located between said first head profile 111a and the cross beam 71 to secure said first auxiliary element 95 to said first support 113 and - when present on the second support 114 - to cooperate with the additional auxiliary element 96 to secure said additional auxiliary element 96 to said second support 114.

As shown in Figures 11 - 13, the first supports 113 are shaped differently than the second supports 114 so that, during assembly of the load body 210, the assembler can quickly identify which supports should be matched to the first head profile and which should be matched to the second head profile.

Referring again to the first embodiment of the assembling kit for assembling load bodies according to the invention, a method for assembling a fixed load body 200 by means of said assembling kit 100 is provided.

Said assembling method comprises the following steps:
a) providing said first longitudinal beam 1a and said second longitudinal beam 1b;
b) providing said center brackets, said end brackets and, optionally, said reinforcement plates;
c) providing said cross beams 7;
d) providing said support elements 9 and, optionally, said cable-tensioning hooks and said reinforcement plates 21;
e) providing said supports 13;
f) providing said first head profile 11a and said second head profile 11b, said second head profile 11b being optionally provided with said electrical components;
g) providing said first lateral profile 15a and said second lateral profile 15b, said first lateral profile 15a and said second lateral profile 15b being optionally provided with said electrical components;
h) providing said two pairs of corner blocks 17a and 17b, said hinges 29 and, optionally, said load-securing rings 23, said elongated pads 33, said supports with rubber pads 35 and said clearance lights 25;
i) providing said panels 19';
said method further comprising the steps of:
j1) fixing the center brackets 3 and the end brackets 5 to said first longitudinal beam 1a and fixing the corresponding center brackets and end brackets to said second longitudinal beam 1b, optionally introducing said reinforcement plates;
j2) fixing said supports 13 to said first longitudinal beam 1a and said second longitudinal beam 1b;
j3) fixing said center brackets and said end brackets to the chassis of the vehicle so as to fix said longitudinal beams 1a and 1b to the chassis of said vehicle;
k1) fixing said support elements 9, and optionally said cable-tensioning hooks, to said cross beams 7;
k2) fixing said support elements 9 and said cross beams 7 to said longitudinal beams 1a and 1b, so as to define said ladder frame, optionally introducing said reinforcement plates 21;
l1) fixing a corner block of said first pair of corner blocks 17a to a first end of said first head profile 11a, fixing a corner block of said second pair of corner blocks 17b at a second end, opposite to said first end, of said first head profile 11a and, optionally, fixing load-securing rings 23 to said first head profile 11a;
l2) fixing said first head profile 11a to the supports 13 located near the first end of said longitudinal beams 1a and 1b;
l3) fixing a corner block of said second pair of corner blocks 17b to a first end of said second head profile 11b and a corner block of said first pair of corner blocks 17a at a second end, opposite to said first end, of said second head profile 11b;
l4) fixing said hinges 29 to said second head profile 11b and, optionally, fixing said elongated pads 33, said supports with rubber pads 35 and said clearance lights 25 to said second head profile 11b;
l5) fixing said second head profile 11b to the supports 13 located near the second end of said longitudinal beams 1a and 1b;
m1) fixing said hinges 29 to said first lateral profile 15a and said second lateral profile 15b and, optionally, fixing said load-securing rings 23, said elongated pads 33, said supports with rubber pads 35 and said clearance lights 25 to said first lateral profile 15a and said second lateral profile 15b;
m2) fixing said first lateral profile 15a and said second lateral profile 15b to said corner blocks so as to define said perimeter profile, simultaneously fixing said first lateral profile 15a and said second lateral profile 15b to the ends of said cross beams 7;
n1) arranging said panels 19' on said ladder frame, in such a way that said panels 19' are supported on said support elements 9, and on said perimeter frame, inserting a portion of the perimeter edge of said panels 19' into the seats provided on said head profiles 11a and
11b and said lateral profiles 15a and 15b;
n2) fixing said panels 19' to said support elements 9 and said perimeter frame;
said method further comprising the steps of:
o1) providing the components intended for assembling said fixed sideboard 27a and said three openable sideboards 27b, said three openable sideboards 27b being provided with said pins 31;
o2) assembling said fixed sideboard 27a and said three openable sideboards 27b;
o3) fixing said fixed sideboard 27a to said first head profile 11a;
o4) inserting said pins 31 of said three openable sideboards 27b into the corresponding hinges 29 fixed to said second head profile 11b and said lateral profiles 15a and 15b in such a way as to rotatably connect said three openable sideboards 27b to said profiles;
said method further comprising the following optional steps:
p1) providing said two mudguards 37, said fixing plates 39 and said toolbox 41;
p2) fixing each of said mudguards 37 to said ladder frame by means of said fixing plates 39 and fixing said toolbox 41 to said ladder frame and/or said perimeter frame.

In all the steps mentioned above, unless otherwise specified, the fixing of said components takes place by means of fixing means such as screws and/or rivets and/or nails.

It will be evident that the same assembling method described above can also be used for assembling fixed a load body 210 by means of the assembling kit 110 according to the second embodiment.

Also, it will be evident to the person skilled in the art that the embodiments described in detail above are not to be construed in any way as limiting and that numerous variations and modifications are possible without departing from the scope of the invention, as defined by the appended claims.

## Claims

1. Assembling kit (100; 110) for assembling a load body to the chassis of a vehicle, said assembling kit (100; 110) consisting of a plurality of mutually associable components, said plurality of components comprising:
- two or more longitudinal beams (1a, 1b; 10a, 10b) intended to be mounted to the chassis of the vehicle, along a direction parallel to the longitudinal axis (L) of said vehicle;
- brackets (3, 5), suitable for fixing said two or more longitudinal beams (1a, 1b; 10a, 10b) to the chassis of said vehicle;
- two or more cross beams (7; 71), intended to be fixed to said two or more longitudinal beams (1a, 1b; 10a, 10b) and oriented perpendicularly with respect to the latter so as to define a ladder frame;
- support elements (9; 91), wherein each of said support elements (9; 91) is suitable for fixing said two or more cross beams (7; 71) to said two or more longitudinal beams (1a, 1b; 10a, 10b);
- supports (13; 113, 114), intended to be fixed to said two or more longitudinal beams (1a, 1b; 10a, 10b), near a first end of said two or more longitudinal beams (1a, 1b; 10a, 10b) and near a second end, opposite to said first end, of said two or more longitudinal beams (1a, 1b; 10a, 10b);
- two head profiles (11a, 11b; 111a, 111b), consisting of:
- a first head profile (11a; 111a), which is intended to be fixed to the supports (13; 113') arranged near said first end of said two or more longitudinal beams (1a, 1b; 10a, 10b) and is oriented perpendicularly with respect to said two or more longitudinal beams (1a, 1b; 10a, 10b);
- a second head profile (11b; 111b), which is intended to be fixed to the supports (13; 113") arranged near said second end of said two or more longitudinal beams (1a, 1b; 10a, 10b) and is oriented perpendicularly with respect to said two or more longitudinal beams (1a, 1b; 10a, 10b);
- two lateral profiles (15a, 15b; 115a, 115b), intended to be fixed to said two or more cross beams (7; 71), at opposite ends of said two or more cross beams (7; 71), and oriented perpendicularly with respect to the latter;
- four corner blocks, wherein each of said corner blocks is intended to fix one end of said two head profiles (11a, 11b; 111a, 111b) to one end of said two lateral profiles (15a, 15b; 115a, 115b) so as to define a perimeter frame; and
- a deck (19; 119), consisting of one or more panels (19'; 119') intended to be arranged at least on said ladder frame and fixed at least to said ladder frame;
**characterized in that** each of said support elements (9; 91) is provided with:
- at least one first connecting portion (9a; 93a), intended to cooperate with one cross beam of said two or more cross beams (7; 71) to connect said support element (9; 91) to said cross beam (7; 71);
- at least one second connecting portion (9b; 93b), perpendicular to said first connecting portion (9a; 93a) and intended to cooperate with one longitudinal beam of said two or more longitudinal beams (1a, 1b; 10a, 10b) to connect said support element (9; 91) to said longitudinal beam;
- at least one flap (9c; 95c) capable of forming a support base (9d; 95d) for said one or more panels (19'; 119') of the deck (19; 119).

2. Assembling kit (100) according to claim 1, wherein each of said support elements (9) has two flaps (9c) which extend from said second connecting portion (9b) and away from the center plane of said second connecting portion (9b) or perpendicularly to said second connecting portion (9b).

3. Assembling kit (100) according to claim 1 or 2, wherein said at least one flap (9c) of each of said support elements (9) has, at said support base (9d), one or more holes suitable to allow the fixing of said one or more panels (19') to said support elements (9) by means of screws and/or rivets and/or nails so that said support base (9d) also forms a fixing base for fixing said one or more panels (19').

4. Assembling kit (100) according to any one of claims 1 - 3, wherein each of said supports (13) has:
- a first securing portion (13a), intended to cooperate with a longitudinal beam of said two or more longitudinal beams (1a, 1b) to secure said support (13) to said longitudinal beam;
- at least one flap (13b) having a second securing portion (13c) which is parallel to said first securing portion (13a) and is intended to cooperate with either said first head profile (11a) or said second head profile (11b) to fix said head profile to said support (13).

5. Assembling kit (110) according to claim 1, wherein each of said support elements (91) comprises:
- a connecting element (93), suitable to form said at least one first connecting portion (93a) and said at least one second connecting portion (93b);
- an auxiliary element (95), suitable to define said flap (95c) capable of forming the support base (95d) for said one or more panels (119');
said connecting element comprising at least one third connecting portion (93b') intended to cooperate with said auxiliary element (95) to connect said auxiliary element (95) to said connecting element (93) so as to join said auxiliary element (95) to the cross beam (71) and the longitudinal beam (10a, 10b) with which said at least one first connecting portion (93a) and said at least one second connecting portion (93b) are intended to cooperate.

6. Assembling kit (110) according to claim 5, wherein said at least one first, one second and one third connecting portions (95a, 95b, 95b') have one or more first, second and third holes (97a, 97b, 97b'), respectively, suitable to be matched with corresponding one or more fourth, fifth and sixth holes (99a, 99b, 99b') provided on said cross beam (71), on said longitudinal beam (10a, 10b) and on said auxiliary element (95), respectively, so that each pair of holes can receive screws and/or rivets and/or nails.

7. Assembling kit (110) according to claim 5 or 6, wherein each of said auxiliary elements (95) is made as a metal sheet bent so as to define said flap (95c) capable of forming said support base (95d).

8. Assembling kit (110) according to claim 5 or 6 or 7, comprising:
- first supports (113), each intended to be fixed near the first end of a longitudinal beam of said two or more longitudinal beams (10a, 10b) to fix the first head profile (111a) to said longitudinal beam and to the auxiliary element (95) arranged between said first head profile (111a) and the cross beam (71) nearest to said first head profile (111a);
- second supports (114), each intended to be fixed near the second end of a longitudinal beam of said two or more longitudinal beams (10a, 10b) to fix the second head profile (111b) to said longitudinal beam and to the auxiliary element (95) arranged between said second head profile (111b) and the cross beam (71) nearest to said second head profile (111b).

9. Assembling kit (110) according to claim 8, wherein each of said first and second supports (113, 114) has:
- at least one first securing portion (113a, 114a), intended to cooperate with a longitudinal beam of said two or more longitudinal beams (10a, 10b) to secure the respective support (113, 114) to said longitudinal beam;
- at least one second securing portion (113b, 114b), intended - when present on the first support (113) - to cooperate with said first head profile (111a) to secure said first head profile (111a) to said first support (113) and - when present on the second support (114) - to cooperate with the second head profile (111b) to secure said second head profile (111b) to said second support (114);
- at least one third securing portion (113c, 114c), intended - when present on the first support (113) - to cooperate with the auxiliary element (95), arranged between said first head profile (111a) and the cross beam (71) nearest to said first head profile (111a), to secure said first auxiliary element (95) to said first support (113) and - when present on the second support (114) - to cooperate with the auxiliary element (95), arranged between said second head profile (111b) and the cross beam (71) nearest to said second head support (111b), to secure said auxiliary element (95) to said second support (114).

10. Assembling kit (100; 110) according to any one of the preceding claims, wherein said assembling kit (100; 110) further comprises:
- a sideboard assembly (27), wherein said sideboard assembly (27) comprises a fixed sideboard (27a), intended to be rigidly fixed to said first head profile (11a; 111a), and three openable sideboards (27b), intended to be pivotally connected to said second head profile (11b; 111b) and to said two lateral profiles (15a, 15b; 115a, 115b);
- universal hinges (29), intended to be fixed, indifferently, to said second head profile (11b; 111b) or to any of said two lateral profiles (15a, 15b; 115a, 115b);
wherein said three openable sideboards (27b) are provided with respective pins (31) intended to be accommodated in said hinges (29) to define the corresponding hinge pin.

11. Method for assembling a load body (200; 210) to the chassis of a vehicle, including the steps of:
a) providing two or more longitudinal beams (1a, 1b; 10a, 10b);
b) providing brackets (3, 5);
c) providing two or more cross beams (7; 71);
d) providing support elements (9; 91);
e) providing supports (13; 113, 114);
f) providing two head profiles (11a, 11b; 111a, 111b);
g) providing two lateral profiles (15a, 15b; 115a, 115b);
h) providing four corner blocks;
i) providing one or more panels (19'; 119');
wherein said method further comprises the steps of:
j) fixing said two or more longitudinal beams (1a, 1b; 10a, 10b) to the chassis of said vehicle by means of said brackets (3, 5) so that said two or more longitudinal beams (1a, 1b; 10a, 10b) are arranged along a direction parallel to the longitudinal axis (L) of said vehicle;
k) fixing said two or more cross beams (7; 71) to said two or more longitudinal beams (1a, 1b; 10a, 10b) by means of said support elements (9; 91) so that said two or more cross beams (7; 71) are perpendicular to said two or more longitudinal beams (1a, 1b; 10a, 10b), thus defining a ladder frame;
l) fixing said two head profiles (11a, 11b; 111a, 111b) to said two or more longitudinal beams (1a, 1b; 10a, 10b) by means of said supports (13; 113, 114) so that said head profiles (11a, 11b; 111a, 111b) are perpendicular to said two or more longitudinal beams (1a, 1b; 10a, 10b) and so that each of said two head profiles (11a, 11b; 111a, 111b) is fixed near opposite ends of said two or more longitudinal beams (1a, 1b; 10a, 10b);
m) fixing said two lateral profiles (15a, 15b; 115a, 115b) to said two or more cross beams (7; 71) and to said two head profiles (11a, 11b; 111a, 111b) so that said two lateral profiles (15a, 15b; 115a, 115b) are perpendicular to said two head profiles (11a, 11b; 111a, 111b), wherein the connection between said two lateral profiles (15a, 15b; 115a, 115b) and said two head profiles (11a, 11b; 111a, 111b) is achieved by means of said four corner blocks, said two head profiles (11a, 11b; 111a, 111b) and said two lateral profiles (15a, 15b; 115a, 115b) defining a perimeter frame;
n) arranging said one or more panels (19'; 119') at least on said ladder frame so that said one or more panels (19'; 119') are supported at least on said support elements (9; 91);
o) fixing said one or more panels (19'; 119') at least to said ladder frame so that said one or more panels (19'; 119') define a deck (19, 119) for said load body (200; 210).
